# EUROPÄISCHE PATENTSCHRIFT

(11) **EP 0 486 637 B1**
(45) Veröffentlichungstag und Bekanntmachung des Hinweises auf die Patenterteilung: **13.09.1995**
(21) Anmeldenummer: 91910299.6
(22) Anmeldetag: 30.05.1991
(51) Int. Cl.: A45D 20/20, A45D 20/42

(54) **BEHANDLUNGSGERÄT IN OFFENER BAUWEISE FÜR MENSCHLICHE KOPFHAARE**
APPLIANCE OF OPEN CONSTRUCTION FOR TREATING HAIR ON THE HUMAN HEAD
APPAREIL A STRUCTURE OUVERTE POUR LE TRAITEMENT DES CHEVEUX HUMAINS

(30) Priorität: 07.06.1990 DE 4018186
(43) Veröffentlichungstag der Anmeldung: 27.05.1992
(73) Patentinhaber: Wella Aktiengesellschaft, 64295 Darmstadt (DE)
(72) Erfinder: FERTIG, Werner, D-6140 Bensheim 1 (DE)
(86) Internationale Anmeldenummer: EP9101004
(87) Internationale Veröffentlichungsnummer: WO9118534

(56) Entgegenhaltungen:
- EP-A- 0 317 902
- DE-B- 1 003 929
- GB-A- 2 115 144

## Beschreibung

Die Erfindung betrifft ein Behandlungsgerät gemäß dem Oberbegriff des Anspruchs 1. Ein derartiges Gerät ist aus der EP-A-0 317 902 bekannt.

Derartige Geräte sind zum Beispiel Infrarotwärmegeräte, Trockenhauben, Dampfgeräte oder Kombinationen aus diesen Geräten. Der Kopf einer zu behandelnden Person sollte stets mittig in einem Behandlungsgerät positioniert sein. Dies ist aus verschiedenen Gründen vorteilhaft. Zum einen wird die für eine Haartrocknung benötigte Zeitdauer minimiert, und zum anderen wird eine gleichmäßige Wirkung chemischer Präparate, zum Beispiel Dauerwellmittel, erreicht.

Man kann bei den bekannten Geräten nicht davon ausgehen, daß die Kopfposition einer zu behandelnden Person während der Behandlungsdauer ortsfest ist. Die für eine Kundin angenehme Bewegungsfreiheit im Kopfbereich hat für die Haarbehandlung den Nachteil, daß nicht unbedingt ein gleichmäßiges Behandlungsergebnis erzielt wird. Im ungünstigsten Fall schläft eine Kundin während der entspannenden Behandlung ein und gerät mit den Haaren deutlich näher an einen den Kopfraum begrenzenden Teil des Behandlungsgerätes als an den diesem gegenüberliegenden. Oder die Kundin saß anfangs gerade und beugt später den Oberkörper nach vorn oder begibt sich in eine leicht dem Liegen angenäherte Sitzposition. In beiden Fällen verläßt sie den optimalen Behandlungsbereich sowohl in horizontaler als auch in vertikaler Richtung.

Der Erfindung liegt die Aufgabe zugrunde, ein Behandlungsgerät für menschliche Kopfhaare zu schaffen, welches die Bewegungsfreiheit des Kopfes einer zu behandelnden Person nicht einschränkt und bei dem trotzdem eine für das Behandlungsergebnis besonders günstige Lage des Kopfes in einem festgelegten Positionsbereich während der gesamten Behandlungsdauer sichergestellt wird.

Gelöst ist die Aufgabe gemäß dem kennzeichnenden Teil des Anspruchs 1. Danach ist im Bereich des Behandlungsgerätes eine Einrichtung zur Überwachung der Kopflage vorgesehen, welche mit mindestens einem Sender und mindestens einem Empfänger zur Erzeugung und zum Empfang eines Meßsignals sowie einer Warneinrichtung zur Anzeige unerwünschter Kopflagen ausgestattet ist.

Das erfindungsgemäße Behandlungsgerät schränkt die Bewegungsfreiheit des Kopfes während der Haarbehandlung nicht ein, da zur überwachung der Kopflage ein Meßsignal eingesetzt wird. Damit kann während der gesamten Behandlungsdauer ein Bewegungsraum vorgegeben werden, innerhalb dem ein gleichmäßiges Behandlungsergebnis erzielbar ist. Durch den Einsatz des Meßsignals ist es möglich, sämtliche unerwünschten, nicht im tolerierten Bewegungsraum positionierten Kopflagen der Kundin dieser selbst oder einer Bedienungsperson im Friseursalon anzuzeigen und gegebenenfalls das Meßsignal für eine spezielle weitere Behandlung auszuwerten.

Weitere Ausgestaltungen des erfindungsgemäßen Behandlungsgerätes sind in den Ansprüchen 2 bis 14 beschrieben.

Gemäß Anspruch 2 ist es vorteilhaft, das Behandlungsgerät mit mindestens einem Reflektor auszustatten, an dem das Meßsignal umgelenkt wird. Dadurch können mit einem einzigen Meßsignal mehrere Begrenzungslinien des tolerierten Bewegungsraumes überwacht werden. Mit zwei Reflektoren kann zum Beispiel eine dreieckförmige Linienüberwachung in einer Ebene erfolgen.

Durch den Einsatz einer Infrarotstrahlung (Anspruch 3) oder eines Ultraschallsignals (Anspruch 4) als Meßsignal können bewährte und kostengünstige Strahler und Sensoren am erfindungsgemäßen Behandlungsgerät eingesetzt werden.

Sind der Sender und der Empfänger für das Meßsignal in einem Bauteil ausgebildet (Anspruch 5), so benötigt man weniger Bauteile und Verkabelung, und diese Sensoren können als Näherungsschalter unter Nutzung des zu erfassenden Objekts als Reflektor verwendet werden.

Durch eine Senderausrichtung in einem spitzen Winkel gegen die Horizontale und die Anbringung eines Reflektors in dieser Richtung, so daß das Meßsignal in etwa zum Sender zurückreflektiert wird (Anspruch 6), ist es möglich, mittels eines einzigen Meßsignals die Änderung einer Kopfposition in zwei im rechten Winkel zueinander weisende Richtungen zu orten. Der weg eines schräg von unten nach oben hinter dem Kopf abgestrahlten, dicht über dem Kopf verlaufenden Meßsignals wird sowohl von einem zu weit nach hinten als auch von einem zu weit nach oben positioniertem Kopf unterbrochen.

Genau eine Bewegungsrichtung kann durch eine horizontale oder vertikale Senderausrichtung überwacht werden (Ansprüche 7 und 8). Dies hat den Vorteil, daß Positionsveränderungen in unterschiedliche Richtungen getrennt angezeigt werden können.

Blendet man das Meßsignal mittels eines unvollständig in das abgestrahlte Signal eingesetzten Reflektors teilweise derart aus, daß das ausgeblendete Meßsignal an diesem Reflektor eine deutliche Richtungsänderung erfährt (Anspruch 9), so lassen sich aus einem Meßsignal zwei Meßsignale erzeugen, mit denen in unterschiedlichen Richtungen Positionen geortet werden können.

Es ist möglich, sowohl in horizontaler als auch in vertikaler Richtung die Kopfposition mittels eines einzigen Meßsignals zu orten, indem das Meßsignal in horizontaler Richtung abgestrahlt, teilweise schräg nach oben aus der horizontalen Ebene gelenkt und das umgelenkte Meßsignal oberhalb der Kopflage nach unten auf die Haare reflektiert wird (Anspruch 10). Nach der Aufteilung des Meßsignals wird der horizontal abgeschickte Signalanteil zur horizontalen Abgrenzung des tolerierten Bewegungsraumes genutzt. Der abgelenkte Strahlanteil dient dagegen der Höhenmessung der Kopflage. Die Kopfhöhe kann dabei nach unterschiedlichen Methoden bestimmt werden. Bei Einsatz eines Ultraschallsignals kann zum Beispiel die Laufzeit eines Ultraschallimpulses und bei einer Infrarotstrahlung ein Reflexionswinkel über die Strahlungsintensität gemessen werden.

Durch die Ausgestaltung der zur Anzeige ungewünschter Kopflagen dienenden Warneinrichtung als optischer Signalgeber (Anspruch 11) können der Kundin und dem Bedienungspersonal des Friseursalons Abweichungen der Kopfposition von der noch tolerierten Position optisch mitgeteilt werden. Setzt man einzelne Meßsignale zur Bestimmung unterschiedlicher Positionen ein, so ist es möglich, jede Abweichung in eine bestimmte Richtung durch einen optischen Signalgeber anzuzeigen. Somit sind alle Abweichungen, zum Beispiel zu hoch, zu tief, zu weit rechts, etc. einzeln erkennbar.

Die Ausgestaltung der Warneinrichtung als akustischer Signalgeber (Anspruch 12) hat den Vorteil, daß Positionsabweichungen von einer Kundin auch mit geschlossenen Augen und vom Bedienungspersonal auch während einer Tätigkeit an einer entfernteren Stelle im Fiseursalon ohne Sichtkontakt zum Behandlungsgerät wahrgenommen werden können.

Sind am Behandlungsgerät mehrere Infrarotsender linienförmig nebeneinander angeordnet und auf einen einzigen Infrarotempfänger ausgerichtet (Anspruch 13), dann kann durch eine Messung der auf den Infrarotempfänger treffenden Strahlungsenergie auf die momentane Kopfposition geschlossen werden.

Sind mehrere Infrarotempfänger linienförmig nebeneinander angeordnet, und ist auf diese ein einziger Infrarotsender ausgerichtet (Anspruch 14), dann ergibt sich die Information über die momentane Kopfposition daraus, ob die einzelnen Infrarotempfänger ein Signal vom Infrarotsender empfangen oder nicht.

Ist das Behandlungsgerät ein Infrarotwärmebehandlungsgerät (Anspruch 15), dann hat die Erfindung schon deshalb einen großen Vorteil, weil bei Infrarotwärmebehandlungsgeräten die Bewegungsfreiheit für die zu behandelnde Person besonders groß ist.

Im folgenden wird die Erfindung anhand von Ausführungsbeispielen darstellenden Figuren näher beschrieben.

Es zeigt:
- Figur 1: in einer perspektivischen Darstellung ein Behandlungsgerät mit vier Infrarotstrahlern zur Erwärmung der Kopfhaare und einem Infrarotsensor, der auf einen Reflektor hin ausgerichtet ist;
- Figur 2: in einer perspektivischen Darstellung ein Behandlungsgerät mit zwei Ultraschallsensoren, von denen einer vertikal und einer horizontal ausgerichtet ist;
- Figur 3: in einer Draufsicht ein Behandlungsgerät mit einem Ultraschallsensor, dessen horizontal abgestrahltes Meßsignal nach mehrfacher Reflexion wieder von ihm empfangen wird;
- Figur 4: in einer perspektivischen Darstellung ein Behandlungsgerät mit einem Ultraschallsensor, dessen zweimal umgelenktes Meßsignal von oben auf das Haar gelangt;
- Figur 5: in einer schematischen Darstellung die Teilung eines Schallkegels;
- Figur 6: in einer schematischen Darstellung eine linienförmige Anordnung von mehreren Sendern, die auf einen einzigen Empfänger ausgerichtet sind; sowie
- Figur 7: in einer perspektivischen Darstellung ein Behandlungsgerät mit einem dreifach aufgeteilten Signal.

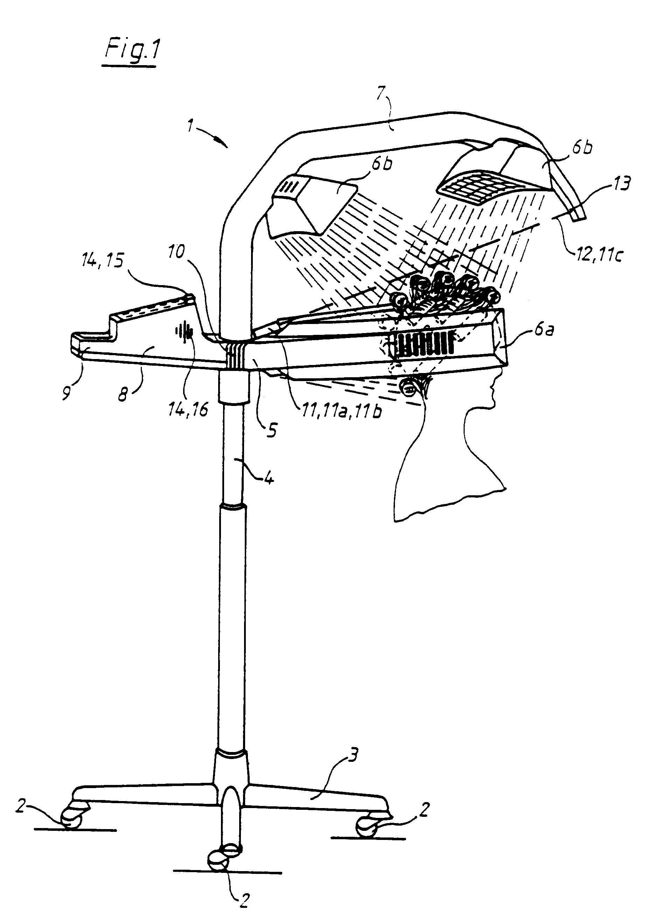

Das Behandlungsgerät 1 besteht aus einem von Rollen 2 getragenen Stativkreuz 3, auf dem ein vertikal ausgerichtetes, längs verschiebbares und axial drehbares Rohr 4 montiert ist (Figur 1). Am oberen Ende dieses Rohres 4 sind zwei Seitenarme 5 mit jeweils einem daran befestigten, horizontal abstrahlenden Infrarotstrahler 6a angebracht. Dort ist auch ein im wesentlichen horizontal vorragender Tragearm 7 befestigt, mit dem zwei schräg nach unten strahlende Infrarotstrahler 6b verbunden sind. Desweiteren ist am oberen Ende des Rohres 4 ein Bedienpult 8 angeordnet.

Ein am Bedienpult 8 befestigter Griff 9 erleichtert die gemeinsame Höhenverstellung beziehungsweise das horizontale Verschwenken der Infrarotstrahler 6a und 6b. Mittels eines Gelenks 10 können die Seitenarme 5 aufeinander zu geklappt werden, wodurch ein geringer Platzbedarf für ein nicht eingesetztes Behandlungsgerät 1 erreicht wird.

Die Kopfposition einer zu behandelnden Person wird mittels der Infrarotstrahlung 11c eines Infrarotsensors 11 bezüglich zwei Bewegungsrichtungen überwacht. Der Infrarotsensor 11 erzeugt ein Meßsignal 12, das von der als Reflektor 13 ausgebildeten Spitze des Tragearms 7 auf den Infrarotsensor 11 zurückgeworfen wird. Ist der Kopf zu hoch positioniert oder der höhenverstellbare Teil des Behandlungsgerätes 1 zu niedrig, so wird das Meßsignal 12 bis auf eine Streustrahlung geringer Intensität daran gehindert, den Reflektor 13 beziehungsweise den Infrarotsensor 11 zu erreichen. Das gleiche passiert, wenn die Person mit dem Kopf zu weit nach hinten auf den unteren Teil des Tragearms 7 zu gelangt. Der einen Infrarotsender 11a und einen Infrarotempfänger 11b enthaltende Infrarotsensor 11 registriert dann ein zu schwaches Meßsignal. Dieser Zustand wird mittels einer Warneinrichtung 14 in Form eines optischen Signalgebers 15 und eines akustischen Signalgebers 16 mitgeteilt.

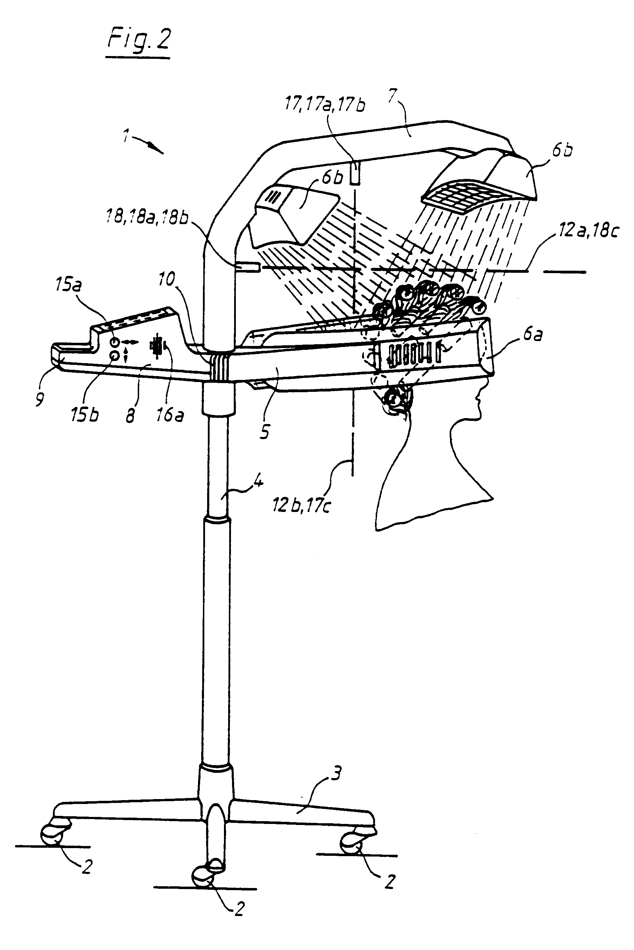

In Figur 2 ist eine weitere Ausgestaltung des erfindungsgemäßen Behandlungsgerätes 1 dargestellt. Zur Ortung der Kopfposition durch Ultraschallsignale 17c, 18c sind hier zwei Ultraschallsensoren 17, 18 am Tragearm 7 befestigt. Die Ultraschallsensoren 17, 18 bestehen jeweils aus einem Ultraschallsender 17a, 18a und einem Ultraschallempfänger 17b, 18b und sind horizontal und vertikal derart ausgerichtet, daß ihre Meßsignale 12a, 12b oberhalb und hinter dem Kopf verlaufen. Ein zu registrierendes Nutzecho entsteht jedoch nur dann, wenn der Kopf im Strahlungsbereich der Infrarotstrahler 6a, 6b in einen der beiden Ultraschallkegel gelangt. Die Ultraschallsensoren 17, 18 arbeiten nach der Methode der Meßzeitbegrenzung. Ihre Schallwandler senden in periodischer Folge Schallimpulspakete aus, von denen ein Teil des Schalls nach Reflexion wieder zum gleichen Wandler zurückgelangt. Die Schallwandler wechseln dazu laufend zwischen Sendeimpulsabstrahlung und Echoempfang. Kurz vor dem erwarteten Eintreffen eines durch einen ungenau positionierten Kopf erzeugten Echos wird die Echo-Detektion freigegeben und kurz nach der Echo-Ankunft wird der Echo-Detektor gesperrt. Mittels derartiger Meßfenster können sämtliche Störechos, die nicht unmittelbar im Bereich des Kopfes entstanden sind, ignoriert werden. Eine detektierte ungewünschte Kopfposition kann durch zwei optische Signalgeber 15a, 15b angezeigt werden. Dabei zeigt der eine optische Signalgeber 15a das Signal des Ultraschallsensors 17 für die Positionsüberwachung in einer horizontalen Richtung an und der andere optische Signalgeber 15b das Signal des Ultraschallsensors 18 für die vertikale Überwachung. Das Aufleuchten der optischen Signalgeber 15a, 15b bei Feststellung einer ungewünschten Kopfposition wird von dem Signalton eines akustischen Signalgebers 16a begleitet.

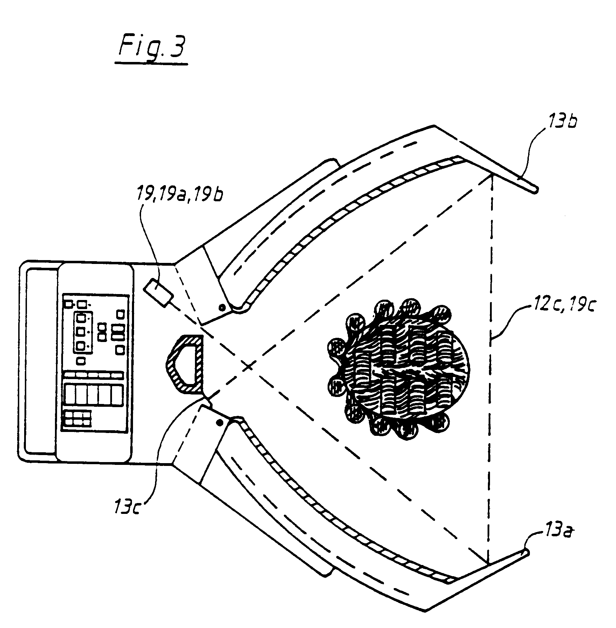

Das gleiche Meßverfahren kann auch bei einer weiteren vorteilhaften Ausgestaltung des erfindungsgemäßen Behandlungsgerätes 1 angewendet werden. Diese Ausgestaltung ermöglicht durch eine Vielfachreflexion des Meßsignals 12c die Positionsbestimmung der Kopflage in mehreren Richtungen mittels eines einzigen Meßsignals 12c (Figur 3). Das vom Ultraschallsensor 19 abgestrahlte Meßsignal 12c wird dabei hintereinander zuerst an zwei Reflektoren 13a, 13b umgelenkt und erfährt dann an einem dritten Reflektor 13c eine exakte Richtungsumkehrung, so daß das Meßsignal 12c auf dem gleichen Weg wieder zum Ultraschallsensor 19 zurückgelangt. Die Kopfposition ist somit in horizontaler Ebene rundherum detektierbar.

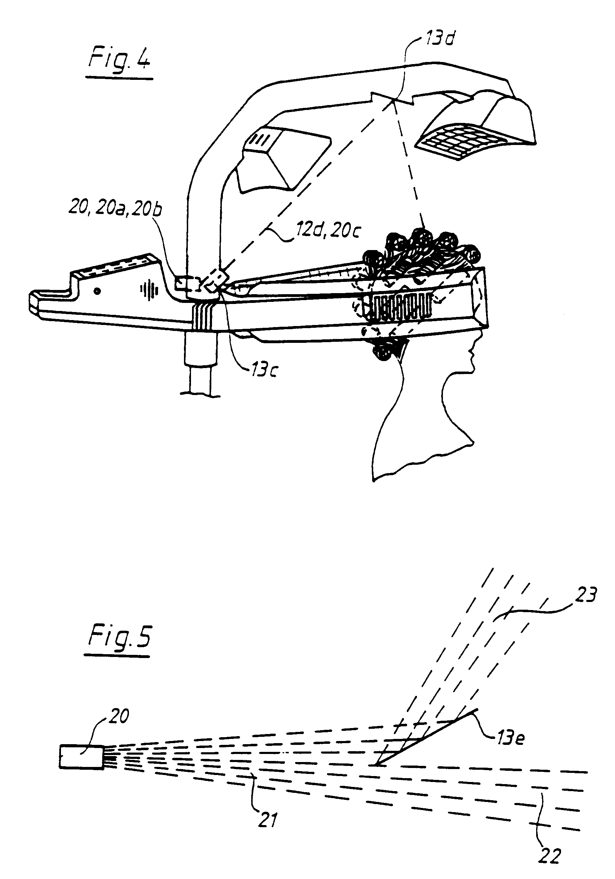

Eine exakte Höhenmessung der Kopflage kann durch ein schräg nach oben auf einen Reflektor 13d am Tragearm 7 ausgerichtetes und von diesem auf den Kopf reflektierten Meßsignal 12d erfolgen (Figur 4). Mit dem oben beschriebenen Meßverfahren kann dadurch eine genaue Höhenbestimmung der Kopflage erfolgen. Das Signal des horizontal ausgerichteten Ultraschallsensors 20 wird mittels eines Reflektors 13c schräg nach oben reflektiert. Schiebt man den Reflektor 13e nur teilweise in den Ultraschallkegel 21, so erfolgt eine Kegelaufspaltung (Figur 5) in einen horizontalen Ultraschallkegel 22 und einen schräg nach oben reflektierten Ultraschallkegel 23. Dadurch ist es möglich, mittels eines einzigen Ultraschallsensors 19 (Figur 3) beziehungsweise 20 (Figur 4) in sämtlichen Bewegungsrichtungen eine überwachung der Kopflage durchzuführen.

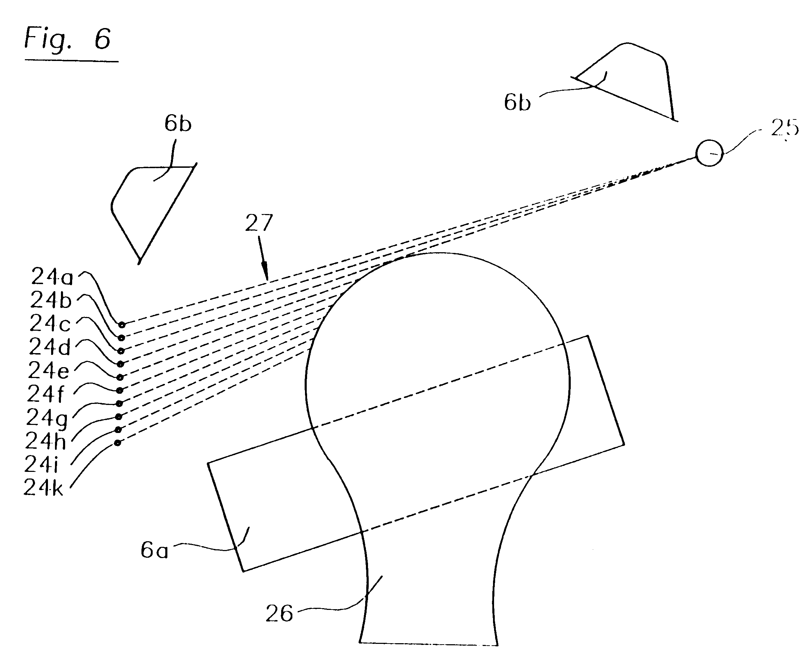

Durch eine linienförmige Anordnung mehrerer Infrarotsender 24a -24k und deren Ausrichtung auf einen einzigen Infrarotempfänger 25 (Figur 6) kann die Position des Kopfes 26 durch eine Messung der auf den Infrarotempfänger 25 auftreffenden Energie des Infrarotsignals 27 bestimmt werden. Auch können einzelne Infrarotsender 24a - 24k zyklisch nacheinander ein- und ausgeschaltet und die gemessenen Signalstärken jeweils gespeichert werden. Die Speicherwerte werden dann mit den Meßwerten einer optimalen Kopfposition verglichen.

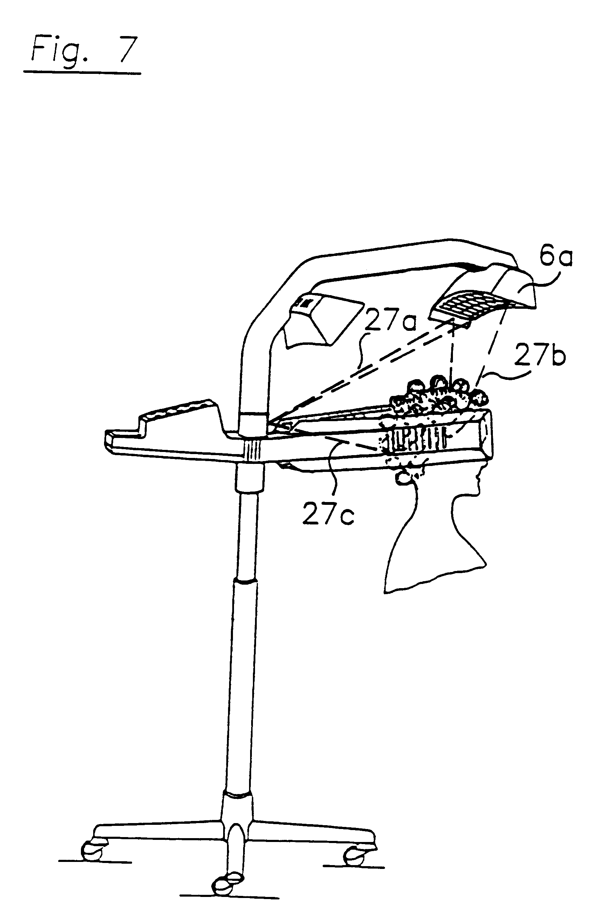

In Figur 7 ist als weiteres Ausführungsbeispiel ein Behandlungsgerät mit drei Ultraschallsignalen 27a, 27b, 27c zur Überwachung der Kopfposition dargestellt. Zwei emittierte Ultraschallsignale 27a, 27b werden nahe der Stirn der zu behandelnden Person von den Haaren reflektiert. Als weiterer Reflektor dient der Infrarotstrahler 6a. Infolge der symmetrischen Strahlführung treffen bei einer korrekten Kopfposition die reflektierten Ultraschallsignale 27a, 27b zeitgleich und zeitkonstant auf den (nicht eingezeichneten) Ultraschallsensor beziehungsweise auf die Ultraschallsensoren. Unterschiedliche Signallaufzeiten lassen auf eine unkorrekte Kopfposition schließen. Durch eine nicht dargestellte Einrichtung werden die gemessenen Signallaufzeiten logisch verarbeitet und es erfolgt gegebenenfalls ein Warnhinweis. Das dritte Ultraschallsignal 27c ist in etwa auf den Nackenbereich der zu behandelnden Person gerichtet. Dadurch kann nicht nur eine zusätzliche Positionsbestimmung, sondern auch eine weitere Abstandsmessung erfolgen.

## Patentansprüche

1. Behandlungsgerät in offener Bauweise für menschliche Kopfhaare bei dem eine Einrichtung zur Überwachung der Kopflage mit einer Warneinrichtung (14) zur Anzeige ungewünschter Kopflagen vorgesehen ist **dadurch gekennzeichnet,** daß die Einrichtung mit mindestens einem Sender (11a, 17a, 18a, 19a, 20a, 24a - 24k) und mindestens einem Empfänger (11b, 17b, 18b, 19b, 20b, 25) zur Erzeugung und zum Empfang eines Meßsignals (12, 12a, 12b, 12c, 12d, 27, 27a, 27b, 27c) ausgestattet ist.

2. Behandlungsgerät nach Anspruch 1, **dadurch gekennzeichnet,** daß das Meßsignal (12, 12c, 12d) mindestens an einem Reflektor (13, 13a, 13b, 13c, 13d) umgelenkt wird.

3. Behandlungsgerät nach Anspruch 1 oder 2, **dadurch gekennzeichnet,** daß das Meßsignal (12) eine Infrarotstrahlung (11c) ist.

4. Behandlungsgerät nach Anspruch 1 oder 2, **dadurch gekennzeichnet,** daß das Meßsignal (12a, 12b, 12c, 12d) ein Ultraschallsignal (17c, 18c, 19c, 20c) ist.

5. Behandlungsgerät nach Anspruch 3 oder 4, **dadurch gekennzeichnet,** daß der Sender (11a, 17a, 18a, 19a, 20a) und der Empfänger (11b, 17b, 18b, 19b, 20b) in einem Bauteil ausgebildet sind.

6. Behandlungsgerät nach mindestens einem der Ansprüche 1 bis 5, **dadurch gekennzeichnet,** daß der Sender (11a) für das Meßsignal (12) in einem spitzen Winkel gegen die Horizontale ausgerichtet und in dieser Richtung ein Reflektor (13) angebracht ist, dessen Flächennormale im Auftreffpunkt des Meßsignals in etwa parallel zu dieser Richtung steht.

7. Behandlungsgerät nach mindestens einem der Ansprüche 1 bis 5, **dadurch gekennzeichnet,** daß der Sender (18a) für das Meßsignal (12a) horizontal ausgerichtet ist.

8. Behandlungsgerät nach mindestens einem der Ansprüche 1 bis 5, **dadurch gekennzeichnet,** daß der Sender (17a) für das Meßsignal (12b) vertikal ausgerichtet ist.

9. Behandlungsgerät nach mindestens einem der vorgenannten Ansprüche, **dadurch gekennzeichnet,** daß in den Weg des Meßsignals teilweise ein Reflektor (13c) eingesetzt ist und das ausgeblendete Meßsignal nach diesem Reflektor (13c) eine deutlich veränderte Ausbreitungsrichtung hat.

10. Behandlungsgerät nach Anspruch 9, **dadurch gekennzeichnet,** daß der Sender (20a) für das Meßsignal horizontal ausgerichtet ist, in dieser Richtung ein teilweise in den Ausbreitungskegel hineinragender, schräg zur horizontalen Ebene verdrehter Reflektor (13c) angebracht ist und der abgelenkte Anteil des Meßsignals (12d) auf einen oberhalb der Kopflage befestigten, nach unten auf die Haare reflektierenden Reflektor (13d) weist.

11. Behandlungsgerät nach Anspruch 1, **dadurch gekennzeichnet,** daß die Warneinrichtung (14) ein optischer Signalgeber (15, 15a, 15b) ist.

12. Behandlungsgerät nach Anspruch 1, **dadurch gekennzeichnet,** daß die Warneinrichtung (14) ein akustischer Signalgeber (16, 16a) ist.

13. Behandlungsgerät nach Anspruch 1, **dadurch gekennzeichnet,** daß mehrere Infrarotsender (24a -24k) linienförmig nebeneinander angeordnet und auf einen einzigen Infrarotempfänger (25) ausgerichtet sind.

14. Behandlungsgerät nach Anspruch 1, **dadurch gekennzeichnet,** daß mehrere Infrarotempfänger linienförmig nebeneinander angeordnet sind und auf diese ein einziger Infrarotsender ausgerichtet ist.

15. Behandlungsgerät nach Anspruch 1, **dadurch gekennzeichnet,** daß das Behandlungsgerät (1) ein Infrarotwärmebehandlungsgerät ist.

## Claims

1. Treatment apparatus of open construction for hair on a human head, in which means for monitoring the position of the head with a warning device (14) for indicating undesirable positions of the head is provided, **characterised in that** the means is equipped with at least one transmitter (11a, 17a, 18a, 19a, 20a, 24a - 24k) and at least one receiver (11b, 17b, 18b, 19b, 20b, 25) for producing and receiving a measuring signal (12, 12a, 12b, 12c, 12d, 27, 27a, 27b, 27c).

2. Treatment apparatus according to Claim 1**, characterised in that** the measuring signal (12, 12c, 12d) is deflected on at least one reflector (13, 13a, 13b, 13c, 13d).

3. Treatment apparatus according to Claim 1 or 2, **characterised in that** the measuring signal (12) is an infrared beam (11c).

4. Treatment apparatus according to Claim 1 or 2, **characterised in that** the measuring signal (12a, 12b, 12c, 12d) is an ultrasonic signal (17c, 18c, 19c, 20c).

5. Treatment apparatus according to Claim 3 or 4, **characterised in that** the transmitter (11a, 17a, 18a, 19a, 20a) and the receiver (11b, 17b, 18b, 19b, 20b) are formed as one unit.

6. Treatment apparatus according to at least one of the Claims 1 to 5, **characterised in that** the transmitter (11a) for the measuring signal (12) is directed at an acute angle towards the horizontal and a reflector (13) is fixed in this direction, and the normal to the reflector surface at the point of impact of the measuring signal is approximately parallel to this direction.

7. Treatment apparatus according to at least one of the Claims 1 to 5, **characterised in that** the transmitter (18a) for the measuring signal (12a) is directed horizontally.

8. Treatment apparatus according to at least one of the Claims 1 to 5, **characterised in that** the transmitter (17a) for the measuring signal (12b) is directed vertically.

9. Treatment apparatus according to at least one of the preceding claims, **characterised in that** a reflector (13c) is positioned partially in the path of the measuring signal and the filtered-out measuring signal has a clearly changed direction of propagation downstream of this reflector (13c).

10. Treatment apparatus according to Claim 9, **characterised in that** the transmitter (20a) for the measuring signal is directed horizontally, a reflector (13c) inclined at an angle to the horizontal plane and projecting partially into the cone of propagation is fixed in this direction and the deflected part of the measuring signal (12d) is directed to a reflector (13d) fastened above the position of the head and reflecting down on the hair.

11. Treatment apparatus according to Claim 1, **characterised in that** the warning system (14) is an optical signal transmitter (15, 15a, 15b).

12. Treatment apparatus according to Claim 1, **characterised in that** the warning system (14) is an acoustic signal transmitter (16, 16a).

13. Treatment apparatus according to Claim 1, **characterised in that** several infrared transmitters (24a - 24k) are arranged in a line adjacent each other and are directed to a single infrared receiver (25).

14. Treatment apparatus according to Claim 1, **characterised in that** several infrared transmitters are arranged in a line adjacent each other and a single infrared transmitter is directed thereto.

15. Treatment apparatus according to Claim 1, **characterised in that** the treatment apparatus is infrared heat treatment apparatus.

## Revendications

1. Appareil de traitement de cheveux, de construction ouverte, dans lequel est prévu un dispositif pour le contrôle de la position de la tête avec un dispositif d'avertissement (14) indiquant des positions indésirables de la tête, caractérisé en ce que le dispositif est équipé d'au moins un émetteur (11a, 17a, 18a, 19a, 20a, 24a à 24k) et d'au moins un récepteur (11b, 17b, 18b, 19b, 20b, 25) destinés respectivement à produire et à recevoir un signal de mesure (12, 12a, 12b, 12c, 12d, 27, 27a, 27b, 27c).

2. Appareil de traitement selon la revendication 1, caractérisé en ce que le signal de mesure (12, 12c, 12d) est dévié au moins sur un réflecteur (13, 13a, 13b, 13c, 13d).

3. Appareil de traitement selon les revendications 1 ou 2, caractérisé en ce que le signal de mesure (12) est un rayonnement à infrarouge (11c).

4. Appareil de traitement selon la revendication 1 ou 2, caractérisé en ce que le signal de mesure (12a, 12b, 12c, 12d) est un signal à ultrasons (17c, 18c, 19c, 20c).

5. Appareil de traitement selon la revendication 3 ou 4, caractérisé en ce que l'émetteur (11a, 17a, 18a, 19a, 20a) et le récepteur (11b, 17b, 18b, 19b, 20b) sont réalisés en un composant.

6. Appareil de traitement selon l'une au moins des revendications 1 à 5, caractérisé en ce que l'émetteur (11a) du signal de mesure (12) est orienté suivant un angle aigu par rapport à l'horizontale et dans cette direction est placé un réflecteur (13) dont la normale à la surface au point d'arrivée du signal de mesure, est à peu près parallèle à cette direction.

7. Appareil de traitement selon l'une au moins des revendications 1 à 5, caractérisé en ce que l'émetteur (18a) du signal de mesure (12a) est orienté horizontalement.

8. Appareil de traitement selon l'une au moins des revendications 1 à 5, caractérisé en ce que l'émetteur (17a) du signal de mesure (12b) est orienté verticalement.

9. Appareil de traitement selon l'une au moins des revendications précédentes, caractérisé en ce que dans le parcours du signal de mesure est placé en partie un réflecteur (13c) et le signal de mesure extrait après ce réflecteur (13c), présente une direction de propagation nettement modifiée.

10. Appareil de traitement selon la revendication 9, caractérisé en ce que l'émetteur (20a) du signal de mesure est orienté horizontalement, un réflecteur (13c) s'engageant en partie dans le cône de propagation, tourné obliquement par rapport au plan horizontal, est placé dans cette direction et la fraction déviée du signal de mesure (12d) est dirigée vers un réflecteur (13d) fixé au-dessus de la position de la tête, réfléchissant vers le bas, sur les cheveux.

11. Appareil de traitement selon la revendication 1, caractérisé en ce que le dispositif d'avertissement (14) est un générateur de signaux optiques (15, 15a, 15b).

12. Appareil de traitement selon la revendication 1, caractérisé en ce que le dispositif d'avertissement (14) est un générateur de signaux acoustiques (16, 16a).

13. Appareil de traitement selon la revendication 1, caractérisé en ce que plusieurs émetteurs à infrarouge (24a, 24k) sont disposés côte à côte en ligne et sont orientés vers un seul récepteur à infrarouge (25).

14. Appareil de traitement selon la revendication 1, caractérisé en ce que plusieurs récepteurs à infrarouge sont disposés côte à côte en ligne et un seul émetteur à infrarouge est dirigé vers ceux-ci.

15. Appareil de traitement selon la revendication 1, caractérisé en ce que l'appareil de traitement (1) est un appareil de traitement thermique à infrarouge.
